# EUROPÄISCHE PATENTSCHRIFT

(11) **EP 0 629 782 B1**
(45) Veröffentlichungstag und Bekanntmachung des Hinweises auf die Patenterteilung: **28.05.1997**
(21) Anmeldenummer: 93121052.0
(22) Anmeldetag: 29.12.1993
(51) Int. Cl.: F15B 13/00, F15B 13/043, F16K 31/06, H01F 7/16

(54) **Steuereinrichtung für ein Mehrwegeventil**
Control device for a multiple-way valve
Dispositif de commande pour une soupape à voies multiples

(30) Priorität: 25.03.1993 DE 4309695
(43) Veröffentlichungstag der Anmeldung: 21.12.1994
(60) Teilanmeldung: 96117916.5
(73) Patentinhaber: Festo KG, D-73734 Esslingen (DE)
(72) Erfinder: Stoll, Kurt, Dipl.-Ing., D-73732 Esslingen (DE); Schnatterer, Jürgen, D-70794 Filderstadt (DE)
(74) Vertreter: Abel, Martin, Dipl.-Ing.

(56) Entgegenhaltungen:
- EP-A- 0 095 331
- EP-A- 0 260 065
- DE-A- 3 346 290
- DE-C- 3 634 349
- JP-U-4/25081

## Beschreibung

Die Erfindung betrifft eine Steuereinrichtung für ein Mehrwegeventil, mit zwei nebeneinander angeordneten Elektromagneten, denen jeweils ein zu betätigendes Ventilglied zugeordnet ist, wobei jeder Elektromagnet eine Spule aufweist, und wobei außerhalb der Spulen eine Jocheinrichtung zur Leitung der Magnetfelder vorgesehen ist, und mit einer Handbetätigungseinrichtung, die zwei jeweils einem der Ventilglieder zugeordnete und manuell verstellbare Betätigungsstößel aufweist, deren mit ihrer Verstellrichtung zusammenfallenden Längsachsen die Längsachsen des jeweils zugeordneten Ventilgliedes mit Abstand passieren.

Eine Steuereinrichtung dieser Art geht aus der JP 4-25081U hervor. Sie ist dort stirnseitig an ein Mehrwegeventil angebaut. Die beiden Elektromagneten gehören zu zwei Magnetventilen, die die Steuerventile des Mehrwegeventils bilden. Durch Erregung des einen oder anderen Elektromagneten läßt sich das zugeordnete Ventilglied betätigen und dadurch der Ventilschieber des Mehrwegeventils umschalten. Indem beide Elektromagneten nebeneinander an einer Stirnseite des Mehrwegeventils sitzen, ergibt sich insgesamt eine relativ kurze Baulänge.

Die Steuereinrichtung ist mit einer Handbetätigungseinrichtung versehen, die über zwei manuell verstellbare Betätigungsstößel unterschiedlicher Länge verfügt. Der längere Betätigungsstößel ist mit einer Aussparung versehen, damit er in unmittelbarer Nähe an dem dem anderen Betätigungsstößel zugeordneten Ventilglied vorbeigeführt werden kann. Eine ovale Querschnittsform des Betätigungsstößels bewirkt eine Verdrehsicherung und sorgt für eine stets korrekte Lage der Aussparung.

Es ist die Aufgabe der vorliegenden Erfindung, eine Steuereinrichtung der eingangs genannten Art zu schaffen, die bei einfacherem Aufbau eine kompakte Bauweise ermöglicht.

Diese Aufgabe wird dadurch gelöst, daß die Ventilglieder mit Bezug zueinander so angeordnet sind, daß ihre Längsachsen in Richtung rechtwinkelig zu einer Bezugsebene versetzt zueinander angeordnet sind, die parallel zu den Längsachsen der Betätigungsstößel und zu den Längsachsen der Ventilglieder verläuft.

Durch die bezüglich der Bezugsebene versetzte Anordnung der Ventilglieder läßt sich der regelmäßig längere der beiden Betätigungsstößel trotz einfacher Ausgestaltung ohne Beeinträchtigung an dem dem anderen Bestätigungsstößel zugeordneten Ventilglied vorbeiführen. Es ist eine vorteilhafte Anordnung möglich, bei der der betreffende Betätigungsstößel an dem dem anderen Betätigungsstößel zugeordneten Ventilglied vorbeigeführt wird, ohne daß besondere Abdichtungsarbeiten erforderlich wären, da der das besagte Ventilglied aufnehmende Raum von der den Betätigungsstößel führenden Bohrung nicht angeschnitten wird. Gleichwohl ist weiterhin eine kompakte Bauweise möglich.

Eine weitere Reduktion des Bauvolumens der Steuereinrichtung ist möglich, wenn die zur Leitung der Magnetfelder vorgesehene Jocheinrichtung ein Jochteil aufweist, das beiden Spulen gemeinsam zugeordnet ist, so daß es vom Magnetfeld beider Spulen durchsetzt werden kann. Dieses Jochteil gehört also gleichzeitig zu beiden Spulen und wird je nach Erregungszustand vom Magnetfeld der einen und/oder der anderen Spule durchsetzt. Bei abwechselnder Erregung der Elektromagneten ist somit das Jochteil abwechselnd dem Magnetfeld beider Spulen ausgesetzt. Auf diese Weise können die Spulen näher zusammengerückt werden.

Zweckmäßigerweise sind die beiden Spulen parallelachsig, das heißt mit zueinander parallelen Längsachsen angeordnet, wobei sich das beiden Spulen gemeinsam zugeordnete Jochteil vorzugsweise in dem Bereich zwischen den beiden Spulen befindet.

Eine jeweilige Spule ist zweckmäßigerweise an mindestens einer und vorzugsweise an beiden Stirnseiten von einer Jochpartie flankiert, die mit dem gemeinsam zugeordneten Jochteil verbunden ist. Die Anordnung ist zweckmäßigerweise so getroffen, daß die Jocheinrichtung eine H-Konfiguration aufweist.

Die Jocheinrichtung und die Spulen sind zweckmäßigerweise in einem Gehäuse aufgenommen, in das sie eingegossen sind. Nachfolgend wird die Erfindung anhand der beiliegenden Zeichnung näher erläutert. In dieser zeigen:
- Figur 1: eine bevorzugte Bauform der erfindungsgemäßen Steuereinrichtung im Längsschnitt und im an ein Mehrwegeventil angeflanschten Zustand, wobei von dem Mehrwegeventil lediglich ein Endabschnitt strichpunktiert angedeutet ist;
- Figur 2: ein Querschnitt durch die Steuereinrichtung aus Figur 1 in verkleinerter Darstellung gemäß Schnittlinie II-II aus Figur 1,
- Figur 3: einen weiteren Querschnitt durch die in Figur 1 gezeigte Steuereinrichtung im Bereich der vorhandenen Handbetätigungseinrichtung entlang der Schnittlinie III-III, wobei die Ventilglieder nicht gezeigt sind, und
- Figur 4: eine Draufsicht auf den die Handbetätigungseinrichtung aufweisenden Abschnitt der Steuereinrichtung mit Blickrichtung gemäß Pfeil IV aus Figur 3.

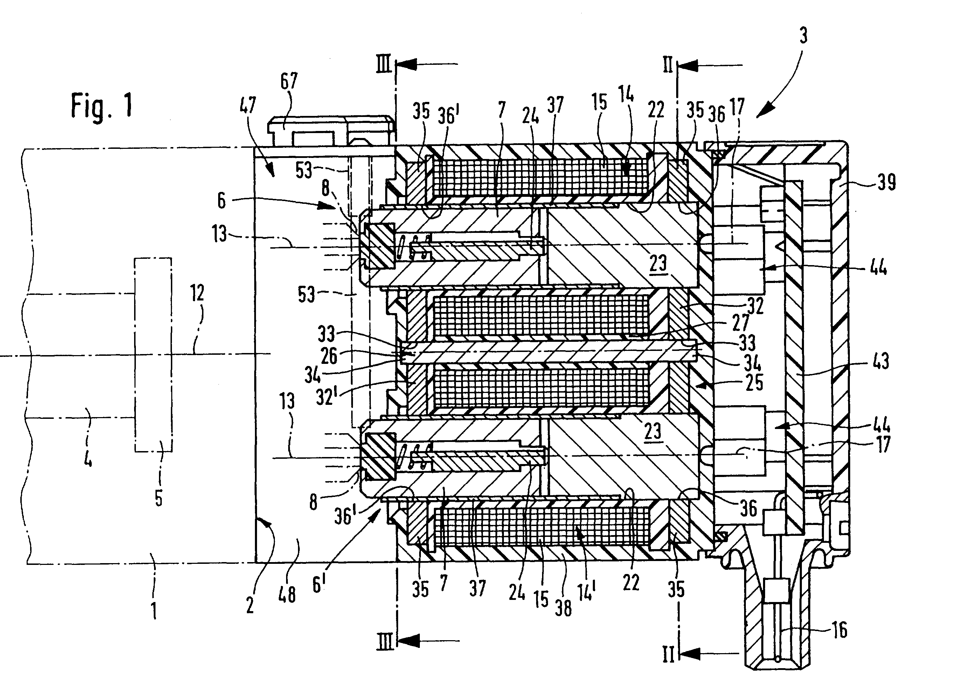

In Figur 1 ist strichpunktiert der eine stirnseitige Endabschnitt eines Mehrwegeventils 1 angedeutet, an dessen Stirnseite 2 die Steuereinrichtung 3 lösbar angebracht ist. Die Steuereinrichtung 3 schließt sich axial an das Mehrwegeventil 1 an. Bei dem Mehrwegeventil 1 handelt es sich beispielsweise um ein 5/3-Wegeventil. Es enthält einen Ventilschieber 4, der verschiedene Schaltstellungen einnehmen kann, in denen er fluidische Verbindung zwischen einer Druckmittelversorgung, einem oder mehreren Verbrauchern und einer oder mehreren Entlüftungsöffnungen herstellt oder unterbricht. Das Umschalten erfolgt pneumatisch, indem eine oder mehrere dem Ventilschieber 4 zugeordnete Betätigungsflächen beaufschlagt werden, die zum Beispiel an einem oder mehreren mit dem Ventilschieber 4 zusammenarbeitenden Betätigungskolben 5 vorgesehen sind, von denen in Figur 1 einer gezeigt ist. Die Zufuhr des entsprechenden Betätigungsdruckmittels wird über die nachfolgend im einzelnen beschriebene Steuereinrichtung 3 gesteuert. Das Mehrwegeventil 1 ist in Gebrauchsstellung zweckmäßigerweise auf einer Verteilerplatte installiert, die interne Druckmittelkanäle aufweist, die mit den nicht gezeigten Ventilkanälen des Mehrwegeventils 1 kommunizieren.

Die beispielsgemäße Steuereinrichtung 3 enthält zwei als Steuerventile fungierende, elektrisch betätigbare Magnetventile 6, 6'. Jedes von ihnen verfügt über ein insbesondere stabähnliches Ventilglied 7, das mit einem Ventilsitz 8 zusammenarbeitet, der in Figur 1 nur strichpunktiert angedeutet ist. Sind beide Ventilsitze 8 wie abgebildet verschlossen, so befindet sich der Ventilschieber 4 in der Regel in einer Neutralposition. Durch wahlweises Betätigen der Magnetventile 6, 6' wird der eine oder ander Ventilsitz 8 freigegeben und der Ventilschieber 4 durch Beaufschlagung der betreffenden Betätigungsfläche in die eine oder andere Axialrichtung umgeschaltet.

Die beiden Magnetventile 6, 6' sind in Querrichtung rechtwinkelig zur Längsachse 12 des Mehrwegeventils 1 und der Steuereinrichtung 3 nebeneinander angeordnet. Die mit der Betätigungsrichtung zusammenfallenden Längsachsen 13 der Ventilglieder 7 verlaufen dabei parallel zu der genannten Längsachse 12.

Jedes Magnetventil 6, 6' verfügt zu seiner Betätigung über einen Elektromagnet 14, 14'. Dieser enthält eine Spule 15, die über nicht näher dargestellte elektrische Leiter mit einer elektrischen Anschlußeinrichtung 16 verbunden ist, an die sich die notwendigen Betätigungssignale lieferende Signalleiter lösbar anschließen lassen. Die Spulen 15 sind parallelachsig angeordnet, ihre Längsachsen 17 verlaufen parallel zueinander, und dazuhin parallel zur Längsachse 12. Die Spulen 15 befinden sich axial auf gleicher Höhe, so daß ihre radial nach außen weisenden Mantelflächen 18 einander zugewandt sind.

Jede Spule 15 hat eine sich axial erstreckende zentrale Durchgangsöffnung 22. In diese ragt das jeweils zugeordnete Ventilglied 7 ausgehend von der dem Mehrwegeventil 1 zugewandten Stirnseite ein Stück weit hinein. Der innenliegenden Endpartie des Ventilgliedes 7 liegt axial ein Magnetkern 23 gegenüber, der ausgehend von der dem Mehrwegeventil 1 entgegengesetzten Stirnseite in die Durchgangsöffnung 22 hineinragt.

Aufgrund eines federnd Rückstellelementes 24, das mit dem zugeordneten Magnetkern 23 zusammenarbeitet, werden die Ventilglieder 7 normalerweise in axialem Abstand vom zugeordneten Magnetkern 23 gehalten und gleichzeitig in die gezeigte Schließstellung gedrückt. Sobald eine Spule von Strom durchflossen wird, bildet sich jedoch ein Magnetfeld aus, dessen Magnetkraft das betreffende Ventilglied 7 unter Verringerung des Luftspaltes an den zugeordneten Magnetkern 23 heranzieht und somit in die Offenstellung umschaltet.

Um bei kompakter Baufweise eine hohe Betätigungskraft zu erzielen, ist zusätzlich zu den Magnetkernen 23 eine außerhalb der Spulen 15 angeordnete Jocheinrichtung 25 Vorgesehen. Sie besteht insbesondere aus Eisen und verringert den magnetischen Widerstand für das Magnetfeld außerhalb der Spulen 15. Ihr besonderer Vorteil liegt darin, daß sie ein Jochteil 26 aufweist, das beiden Spulen gemeinsam zugeordnet ist, so daß es vom Magnetfeld beider Spulen durchsetzt werden kann. Das betreffende Jochteil 26 befindet sich vorzugsweise in dem Zwischenbereich 27 zwischen den beiden benachbarten Spulen 15, wobei es sich vorzugsweise über die gesamte Länge beider Spulen 15 erstreckt.

Wird der in Figur 1 oben liegende Elektromagnet 14 erregt, so verlaufen die außerhalb der Spule erzeugten Feldlinien zumindest teilweise entlang dem Jochteil 26. Desgleichen trifft für die Feldlinien des zweiten Elektromagneten 14' zu,wenn dieser erregt wird. Das Jochteil 26 wird also mehrfach genutzt. Auf diese Weise kann man die beiden Spulen 15 sehr nahe zueinander rücken, was die Querabmessungen - vorliegend in Höhenrichtung - reduziert, ohne die Betätigungskraft zu beeinträchtigen.

Im konkreten Fall des Ausführungsbeispiels ist das Jochteil 26 plattenförmig ausgebildet, wobei es so ausgerichtet ist, daß seine beiden einander entgegensetzten Plattenflächen 28 jeweils einer der Spulen 15 zugewandt sind.

Beim Ausführungsbeispiel sind außer dem erwähnten Jochteil 26 keine weiteren Jochpartien im Bereich der Mantelflächen 18 der Spulen 15 vorgesehen. Insbesondere die dem Jochteil 26 jeweils diametral entgegengesetzten Mantelabschnitte der Spulen 15 sind vorzugsweise jocheinrichtungsfrei, was eine weitere Reduzierung der Querabmessungen der Steuereinrichtung 3 gestattet.

Die Jocheinrichtung 25 des Ausführungsbeispiels hat eine H-Konfiguration. Das mittlere Verbindungsstück des H entspricht dem den beiden Spulen 15 gemeinsam zugeordneten Jochteil 26. An dessen beiden axial gerichteten Stirnseiten schließt sich jeweils ein Joch-Querelement 32, 32' an, die die beiden parallelen H-Abschnitte bilden und mit dem Jochteil 26 in leitender Verbindung stehen. Sie sind vorzugsweise ebenfalls plattenförmig ausgebildet, wobei ihre Plattenflächen parallel zu den Stirnflächen der Spulen 15 ausgerichtet sind. Es handelt sich bei den beiden Joch-Querelementen 32, 32' vorzugsweise jeweils um einstückige Bauteile, die separat vom dem Jochteil 26 gefertigt, mit diesem jedoch fest verbunden sind. Die Verbindung erfolgt beispielsgemäß dadurch, daß jedes Joch-Querelement 32, 32' etwa mittig eine Durchbrechung 33 aufweist, in die das Jochteil 26 mit einem stirnseitigen Vorsprung 34 eingesteckt und anschließend verpreßt ist.

Auf diese Weise ist jede Spule 15 an beiden axial gerichteten Stirnseiten von einer Jochpartie 35 flankiert, die beispielsgemäß von jeweils einer Hälfte des zugeordneten Joch-Querelementes 32, 32' gebildet ist.

Die Eisen- bzw. Magnetkerne 23 sind mit den an der zugeordneten Stirnseite vorgesehenen Jochpartien 35 leitend insbesondere fest verbunden. Die Magnetkerne 23 ragen zweckmäßigerweise ein Stück weit auf der dem zugeordneten Ventilglied abgewandten Stirnseite aus der Durchgangsöffnung 22 heraus und in eine komplmentäre Ausnehmung oder Durchbrechung 36 der zugeordneten Jochpartie 35 hinein.

Bei Betätigung kann sich somit bei jedem Elektromagnet 14, 14' ein Magnetkreis ausbilden, der sich vom Magnetkern 23 über dessen Jochpartie 35, das gemeinsam zugeordnete Jochteil 26, die dem Ventilglied 7 zugeordnete Jochpartie 35 und dem Ventilglied 7 zurück zum Magnetkern 23 erstreckt.

Die Montage der Anordnung ist äußerst einfach. Nachdem zuerst die Jocheinrichtung 25 zusammengebaut ist, werden die Spulen 15 in die beiden Zwischenräume zwischen den Joch-Querelementen 32, 32' beidseits des Jochteils 26 eingesteckt. Anschließend werden die Magnetkerne 23 eingesetzt, die zum jeweiligen Ventilglied 7 hin zweckmäßigerweise noch eine hülsenartige Verlängerung 37 aufweisen, die als Führungsbüchse für die koaxial eingesetzten Ventilglieder 7 fungiert. Diese Verlängerung 37 ragt an der ventilgliedseitigen Stirnseite der Spulen 15 zweckmäßigerweise aus der Durchgangsöffnung 22 hinaus und greift in eine komplementären Durchmesser aufweisende Durchbrechung 36' der zugeordneten Jochpartie 35 ein, die sie zweckmäßigerweise durchsetzt. Ist der Magnetkern 23 mit der hülsenartigen Verlängerung 37 eingesetzt, so ist eine jeweilige Spule 15 zusätzlich zu der von den Joch-Querelementen 32, 32' bewirkten axialen Fixierung auch in Querrichtung festgelegt. Damit sich die Zuordnung zwischen den einzelnen Bauteilen nicht mehr ändert, ist die gesamte Anordnung noch in einem Gehäuse 38 fixiert. Bei diesem handelt es sich zweckmäßigerweise um eine Gießteil, , das um die Elektromagnetanordnung herumgegossen ist. Das Gehäusematerial kann unmittelbar an den Mantelflächen 18 der Spulen 15 anliegen, so daß diese, wie auch die Jocheinrichtung 25, vollständig in insbesondere aus Kunststoff bestehendes Gehäusematerial eingebettet ist.

An die dem Mehrwegeventil 1 axial abgewandte Stirnseite des Gehäuses 38 kann, insbesondere lösbar, ein weiteres Gehäuseteil 39 angesetzt sein, das eine Leiterplatte 43 aufnimmt. Sie steht einerseits in elektrischer Verbindung mit der Anschlußeinrichtung 16. Andererseits ist sie insbesondere über elektrische Steckvorrichtungen 44 an die Spulendrähte angeschlossen. Das Gehäuseteil 39 läßt sich an das Gehäuse 38 anstecken, wobei die elektrischen Steckvorrichtungen 44 automatisch in Steckeingriff gelangen. Eine zusätzliche Fixierung mittels Schrauben ist möglich. Über die elektrische Anschlußeinrichtung 16 kann mithin unter Verwendung eines einzigen Mehrfachsteckers der gleichzeitige elektrische Anschluß beider Spulen 15 bewerkstelligt werden.

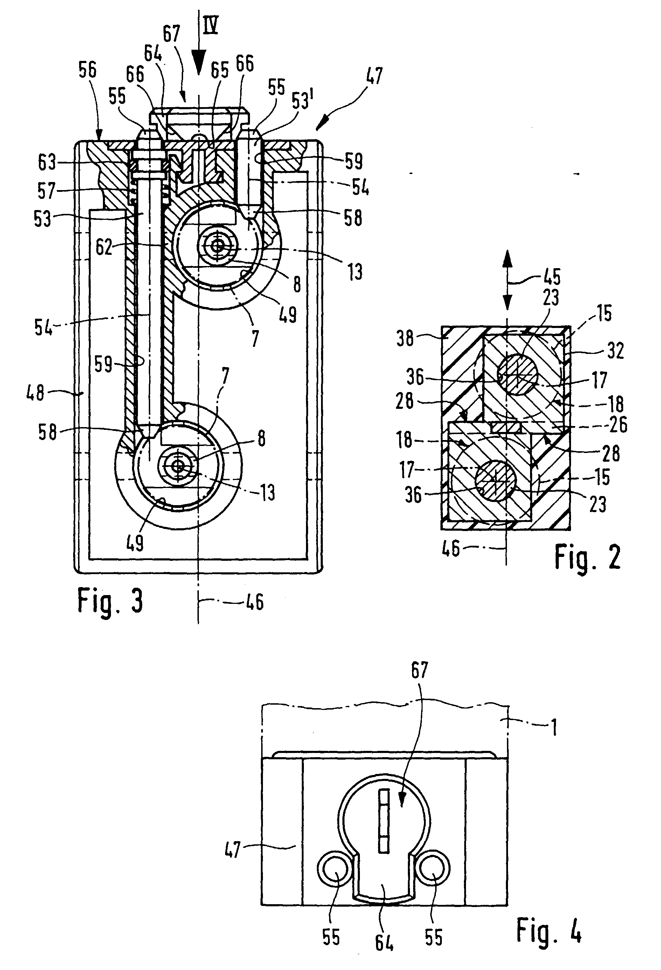

Im Falle der beispielsgemäßen Ausführungsform ist eine besonders schmale Bauweise gewünscht, da mehrere der gezeigten Mehrwegeventil-Steuereinrichtung-Kombinationen Seite an Seite zu einer batterieartigen Anordnung zusammengefaßt werden sollen. Die Spulen 15 sind daher in einer Höhenrichtung 45 übereinanderliegend angeordnet, die rechtwinkelig zur Richtung der Aneinanderreihung besagter Kombinationen verläuft. Die Steuereinrichtung 3 hat zweckmäßigerweise einen Rechteckquerschnitt, wobei die längeren Seiten in Höhenrichtung 45 verlaufen (Figur 2).

Es ist beim Ausführungsbeispiel ferner vorgesehen, daß die Längsachsen 17 der Spulen 15 relativ zueinander in rechtwinkeliger Richtung bezüglich einer Bezugsebene 46 versetzt zueinander angeordnet sind, wobei besagte Bezugsebene 46 von der Höhenrichtung 45 und der Richtung der Längsachse 12 der Steuereinrichtung 3 aufgespannt wird. Die Bezugsebene 46 ist beim Ausführungsbeispiel eine Längsmittelebene, wobei die Längsachsen 17 auf entgegengesetzten Seiten dieser Ebene angeordnet sind, und zwar insbesondere mit gleichem Abstand dazu (Figur 2).

Man hat diese Anordnung beim Ausführungsbeispiel gewählt, um eine entsprechend versetzte Anordnung der Ventilglieder 7 zu erhalten, was es desweiteren ermöglicht, eine besonders vorteilhafte Handbetätigungseinrichtung 47 vorzusehen, die bei Bedarf ein manuelles Betätigen der Ventilglieder 7 erlaubt. Sie ist im Bereich zwischen dem Gehäuse 38 und der Stirnseite 2 des Mehrwegeventils 1 angeordnet und verfügt zweckmäßigerweise über ein eigenes Gehäuse 48. Ihr Aufbau im einzelnen läßt sich insbesondere der Figur 3 entnehmen, in der die Ventilglieder 7 der Übersichtlichkeit wegen lediglich strichpunktiert angedeutet sind.

Die Ventilsitze 8 befinden sich zweckmäßigerweise am oder im Gehäuse 48 der Handbetätigungseinrichtung 47. Sie liegen jeweils am Grund einer Ausnehmung 49, die zu den Spulen 15 hin offen ist und in die die Ventilglieder 7 stirnseitig hineinragen. Infolge der koaxialen Ausrichtung einer jeweiligen Spule 15, des zugeordneten Ventilgliedes 7 und der zugehörigen Ausnehmung 49 weisen die Ausnehmungen 49 einen dem Spulenversatz entsprechenden Seitenversatz mit Bezug zu der Bezugsebene 46 auf.

Die Handbetätigungseinrichtung 47 verfügt über zwei Betätigungsstößel 53, 53', von denen einer jeweils einem der Ventilglieder 7 zugeordnet ist. Sie verlaufen parallel zueinander und sind jeweils in Richtung ihrer Längsachsen 54 bezüglich dem Gehäuse 48 verstellbar. Die Längsachsen 54 verlaufen parallel zu der Bezugsebene 46 auf entgegengesetzten Seiten derselben, wobei sie so angeordnet sind, daß sie die Längsachse 13 des jeweils zugeordneten Ventilgliedes 7 nicht treffen, sondern mit Abstand passieren.

Beide Betätigungsstößel 53, 53' ragen mit einem axialen Endbereich 55 an einer gemeinsamen Außenflächen 56 - die beim Ausführungsbeispiel nach oben weist - aus dem Gehäuse 48 heraus. In diese Ausgangsstellung sind sie federnd vorgespannt, eine entsprechende Feder 57 ist der Einfachheit halber nur beim einen Betätigungsstößel 53 angedeutet. Mit ihrem entgegengesetzten Endbereich, nachfolgend als Betätigungsende 58 bezeichnet, ragen die Betätigungsstößel 53, 53' umfangsseitig in die Ausnehmung 49 für das zugeordnete Ventilglied 7 hinein. Drückt man mit dem Finger auf den äußeren Endbereich 55 eines Betätigungsstößels 53, so verlagert sich dieser weiter in die zugeordnete Ausnehmung 49 hinein und drückt mit dem Betätigungsende 58 auf den Endbereich des zugeordneten Ventilgliedes 7, so daß dieses vom Ventilsitz 8 abgehoben wird. Nimmt man den Finger weg, so werden die Betätigungsstößel aufgrund der federnden Rückstellkraft selbsttätig in die Ausgangsstellung zurückgestellt. Die Betätigungsstößel 53, 53' haben vorzugsweise einen kreisrunden Querschnitt und laufen am Betätigungsende 58 verjüngt aus. Das Betätigungsende 58 ist zweckmäßigerweise kegelstumpfförmig geformt. Somit erübrigt sich eine Verdrehsicherung für die Betätigungsstößel 53, denn stets liegt dem Ventilglied 7 eine von dem Betätigungsende 58 gebildete Schrägfläche gegenüber, die bei Verlagerung des betreffenden Betätigungsstößels 53, 53' am zugeordneten Ventilglied 7 abgleiten und dieses dadurch verstellen kann.

Die beiden Betätigungsstößel 53, 53' sind zweckmäßigerweise in kanalartigen Aufnahmen 59 geführt, die jeweils einerseits-zur Außenfläche 56 und andererseits zur zugeordneten Ausnehmung 49 ausmünden.

Aufgrund des unterschiedlichen Abstandes zwischen der Außenfläche 56 und einer jeweiligen Ausnehmung 49 sind die beiden Betätigungsstößel 53, 53' unterschiedlich lang. Der längere Betätigungsstößel 53 passiert die näher an der Außenfläche 56 angeordnete Ausnehmung 49 seitlich. Infolge des Querversatzes der beiden Ausnehmungen 49 ist hierbei gewährleistet, daß der Betätigungsstößel 53 neben der betreffenden Ausnehmung 49 vorbeigeführt werden kann und diese auch nicht teilweise durchsetzt. Zwischen der passierten Ausnehmung 49 und dem längeren Betätigungsstößel 53 verbleibt ein die Ausnehmung 49 begrenzender Wandabschnitt 62. Mit anderen Worten, die der Außenfläche 56 benachbarte Ausnehmung 49 wird von der zur anderen Ausnehmung 49 führenden Aufnahme 59 des zugeordneten Betätigungsstößels 53 nicht getroffen. Auf diese Weise erspart man sich aufwendige Abdichtungen, da die Ausnehmung 49 je nach Schaltstellung des zugeordneten Ventilgliedes 7 mit Druckmittel beaufschlagt sein kann.

Die Längsachse 13 des näher an der Außenfläche 56 liegenden Ventilgliedes 7 liegt auf der einen Seite der sich längsmittig erstreckenden Bezugsebene 46. Die Längsachse 13 verläuft hierbei in dem zwischen der Bezugsebene 46 und der Längsachse 54 des zugehörigen Betätigungsstößels 53' liegenden Bereich. Die Längsachse 13 des weiter entfernten Ventilgliedes 7 befindet sich auf der anderen Seite der Bezugsebene 46, liegt jedoch ebenfalls in dem Bereich zwischen dieser Bezugsebene 46 und der Längsachse 54 des zugeordneten längeren Betätigungsstößels 53.

Zwischen einem jeweiligen Betätigungsstößel 53, 53' und dem Gehäuse 48 ist zweckmäßigerweise noch eine Dichtung 63 vorgesehen, die der Einfachheit halber lediglich bei dem längeren Betätigungsstößel 53 angedeutet ist. Sie verhindert einen Druckmittelaustritt aus der zugeordneten Ausnehmung 49 über die sich anschließende Aufnahme 59.

Die Handbetätigungseinrichtung 47 des Ausführungsbeispiels ist noch mit einer Arretiervorrichtung 67 ausgestattet. Diese ermöglicht es, wahlweise einen der Betätigungsstößel 53, 53' in der hineingedrückten betätigten Stellung lösbar zu arretieren. Sie um faßt ein bezüglich dem Gehäuse 48 drehbar gelagertes Schwenkteil 64, das sich über den einen oder anderen Endbereich 55 der Betätigungsstößel 53 schwenken läßt. Es befindet sich im Bereich der Außenfläche 56 und verfügt an der dem Gehäuse 48 zugewandten Seite über eine Drückfläche 65. Diese kann in der verschwenkten Stellung den ausgewählten Betätigungsstößel 53 beaufschlagen und nach innen drücken. Sich an die Drückfläche 65 anschließende Schrägflächen 66 des Schwenkteils 64 gewährleisten, daß ein jeweiliger Betätigungsstößel 53 beim Verschwenken des Schwenkteils 64 ohne zusätzliche manuelle Einwirkung von der Ausgangsstellung in die betätigte Stellung überführt wird. Die Arretierung kann während der Einrichtphase oder bei Instandsetzungsarbeiten von Vorteil sein.

## Patentansprüche

1. Steuereinrichtung für ein Mehrwegeventil, mit zwei nebeneinander angeordneten Elektromagneten (14,14'), denen jeweils ein zu betätigendes Ventilglied (7) zugeordnet ist, wobei jeder Elektromagnet (14,14') eine Spule (15) aufweist, und wobei außerhalb der Spulen (15) eine Jocheinrichtung (25) zur Leitung der Magnetfelder vorgesehen ist, und mit einer Handbetätigungseinrichtung (47), die zwei jeweils einem der Ventilglieder (7) zugeordnete und manuell verstellbare Betätigungsstößel (53,53') aufweist, deren mit ihrer Verstellrichtung zusammenfallenden Längsachsen (54) die Längsachsen (13) des jeweils zugeordneten Ventilgliedes (7) mit Abstand passieren, dadurch gekennzeichnet, daß die Ventilglieder (7) mit Bezug zueinander so angeordnet sind, daß ihre Längsachsen in Richtung rechtwinkelig zu einer Bezugsebene (46) versetzt zueinander angeordnet sind, die parallel zu den Längsachsen (54) der Betätigungsstößel (53) und zu den Längsachsen (13) der Ventilglieder (7) verläuft.

2. Steuereinrichtung nach Anspruch 1, dadurch gekennzeichnet, daß eine Arretiervorrichtung (63) vorhanden ist, mit der wahlweise einer der Betätigungsstößel (53,53') in betätigter Stellung lösbar festlegbar ist.

3. Steuereinrichtung nach Anspruch 1 oder 2, dadurch gekennzeichnet, daß jedes Ventilglied (7) mit einem Ventilsitz (8) zusammenarbeitet, der sich in einer Ausnehmung (49) befindet, wobei der dem einen Ventilglied (7) zugeordnete Betätigungsstößel (53) neben der dem anderen Venilglied (7) zugeordneten Ausnehmung (49) ohne Durchsetzung derselben vorbeigeführt ist.

4. Steuereinrichtung nach einem der Ansprüche 1 bis 3, dadurch gekennzeichnet, daß die Jocheinrichtung (25) ein Jochteil (26) aufweist, das beiden Spulen (15) gemeinsam zugeordnet ist, so daß es vom Magnetfeld beider Spulen (15) durchsetzt werden kann.

5. Steuereinrichtung nach Anspruch 4, dadurch gekennzeichnet, daß das beiden Spulen (15) gemeinsam zugeordnete Jochteil (26) in dem zwischen den benachbarten Spulen (15) befindlichen Zwischenbereich (27) vorgesehen ist.

6. Steuereinrichtung nach Anspruch 4 oder 5, dadurch gekennzeichnet, daß die beiden Spulen (15) parallelachsig mit einander zugewandten Mantelflächen (18) angeordnet sind.

7. Steuereinrichtung nach Anspruch 6, dadurch gekennzeichnet, daß das gemeinsam zugeordnete Jochteil (26) plattenförmig ausgebildet ist, wobei die beiden Plattenflächen (28) jeweils einer der beiden Spulen (15) zugewandt sind.

8. Steuereinrichtung nach Anspruch 6 oder 7, dadurch gekennzeichnet, daß die beiden Spulen (15) im Bereich der voneinander abgewandten Abschnitte ihrer Mantelflächen jocheinrichtungsfrei sind.

9. Steuereinrichtung nach einem der Ansprüche 6 bis 8, dadurch gekennzeichnet, daß jede Spule (15) an mindestens einer und vorzugsweise an beiden Stirnseiten von einer Jochpartie (35) flankiert ist, die mit dem gemeinsam zugeordneten Jochteil (26) verbunden ist.

10. Steuereinrichtung nach Anspruch 9, dadurch gekennzeichnet daß die Jocheinrichtung (25) eine H-Konfiguration aufweist, wobei das mittlere Verbindungsstück des H dem gemeinsam zugeordneten Jochteil (26) und die anderen vier H-Abschnitte den stirnseitigen Jochpartien (35) entsprechen.

11. Steuereinrichtung nach Anspruch 10, dadurch gekennzeichnet, daß die jeweiligen beiden Jochpartien (35), die den zur gleichen Axialseite weisenden Stirnseiten der beiden Spulen (15) zugeordnet sind, zu einem Joch-Querelement (32, 32') zusammengefaßt sind, das an der zugeordneten Stirnseite des separat ausgebildeten, gemeinsam zugeordneten Jochteils (26) befestigt ist.

12. Steuereinrichtung nach einem der Ansprüche 3 bis 11, dadurch gekennzeichnet, daß die stirnseitigen Jochpartien (35) plattenförmig ausgebildet sind.

13. Steuereinrichtung nach einem der Ansprüche 1 bis 12, dadurch gekennzeichnet, daß die Jocheinrichtung (25) und die Spulen (15) in ein Gehäuse (38) eingegossen sind.

14. Steuereinrichtung nach einem der Ansprüche 1 bis 13, dadurch gekennzeichnet, daß die beiden Spulen (15) in Höhenrichtung (45) der Steuereinrichtung (3) übereinander angeordnet sind, wobei ihre Längsachsen (17) rechtwinkelig zu der durch die Höhenrichtung (45) und die Längsrichtung (12) der Steuereinrichtung (3) aufgespannten Bezugsebene (46) versetzt zueinander angeordnet sind.

## Claims

1. Control unit for a multiway valve, with two electromagnets (14, 14') arranged next to one another and each being assigned a valve member (7) to be actuated, wherein each electromagnet (14, 14') has a coil (15), with a yoke device (25) provided outside the coils (15) to conduct the magnetic fields, and with a manual operation device (47) which has two manually adjustable actuating tappets (53, 53'), each assigned to one of the valve members (7) and having longitudinal axes (54) coinciding with their direction of adjustment which pass with clearance the longitudinal axes (13) of the respectively-assigned valve member (7), characterized in that the valve members (7) are so arranged relative to one another that their longitudinal axes are offset relative to one another at right-angles to a reference plane (46) which runs parallel to the longitudinal axes (54) of the actuating tappets (53) and to the longitudinal axes (13) of the valve members (7).

2. Control unit according to claim 1, characterized in that there is a locating device (63) by means of which one of the actuating tappets (53, 53') may be releasably fixed in the actuated position.

3. Control unit according to claim 1 or 2, characterized in that each valve member (7) operates in conjunction with a valve seat (8) which is located in a recess (49), wherein the actuating tappet (53) assigned to one valve member (7) is guided past the recess (49) assigned to the other valve member (7) without passing through it.

4. Control unit according to any of claims 1 to 3, characterized in that the yoke device (25) has a yoke element (26) assigned jointly to both coils (15), so that the magnetic field of both coils (15) can pass through it.

5. Control unit according to claim 4, characterized in that the yoke element (26) assigned jointly to both coils (15) is provided in the intermediate area between the adjacent coils (15).

6. Control unit according to claim 4 or 5, characterized in that the two coils (15) are arranged with parallel axes, and with circumferential surfaces (18) facing one another.

7. Control unit according to claim 6, characterized in that the jointly-assigned yoke element (26) is plate-shaped, with each of the two plate surfaces (28) facing one of the two coils (15).

8. Control unit according to claim 6 or 7, characterized in that the two coils (15) have no yoke device in the sections of their circumferential surfaces facing away from one another.

9. Control unit according to any of claims 6 to 8, characterized in that each coil (15) is flanked, on at least one end and preferably at both ends, by a yoke section (35) connected to the jointly-assigned yoke element (26).

10. Control unit according to claim 9, characterized in that the yoke device (25) has an H-configuration, wherein the central connecting piece of the H corresponds to the jointly-assigned yoke element (26), and the other four H sections to the end-face yoke sections (35).

11. Control unit according to claim 10, characterized in that the two respective yoke sections (35) assigned to the ends of the two coils (15) facing the same axial side, are combined to form a yoke transverse element (32, 32'), which is attached to the assigned end of the separately formed, jointly-assigned yoke element (26).

12. Control unit according to any of claims 3 to 11, characterized in that the end-face yoke sections (35) are plate-shaped.

13. Control unit according to any of claims 1 to 12, characterized in that the yoke device (25) and the coils (15) are cast integrally with a housing (38).

14. Control unit according to any of claims 1 to 13, characterized in that the two coils (15) are arranged above one another in the vertical direction (45) of the control unit (3), with their longitudinal axes (17) arranged offset to one another at right-angles to the reference plane (46) fixed by the vertical direction (45) and the longitudinal direction (12) of the control unit (3).

## Revendications

1. Dispositif de commande d'une vanne à plusieurs voies, comportant deux électro-aimants (14, 14'), disposés côte à côte, à chacun desquels est associé un organe de vanne (7) à actionner, chaque électro-aimant (14, 14') présentant une bobine (15), et à l'extérieur des bobines (15) étant prévu un dispositif à culasse (25) pour le guidage des champs magnétiques, et comportant un dispositif d'actionnement manuel (47), qui présente deux poussoirs d'actionnement (53, 53') associés chacun à l'un des organes de vanne (7) et réglables manuellement, dont les axes longitudinaux (54), coïncidant avec leur direction de réglage, passent à distance des axes longitudinaux (13) des organes de vanne (7) correspondants, caractérisé en ce que les organes de vanne (7) sont disposés l'un par rapport à l'autre de manière que leurs axes longitudinaux soient décalés l'un par rapport à l'autre dans une direction perpendiculaire à un plan de référence (46), qui est parallèle aux axes longitudinaux (54) des poussoirs d'actionnement (53) et aux axes longitudinaux (13) des organes de vanne (7).

2. Dispositif de commande selon la revendication 1, caractérisé en ce qu'il est prévu un dispositif de blocage (63) au moyen duquel l'un des poussoirs d'actionnement (53, 53') au choix peut être fixé de manière non permanente dans la position actionnée.

3. Dispositif de commande selon la revendication 1 ou 2, caractérisé en ce que chaque organe de vanne (7) coopère avec un siège de vanne (8), qui se trouve dans un évidement (49), le poussoir d'actionnement (53), associé à un organe de vanne (7), passant devant et à côté de l'évidement (49), associé à l'autre organe de vanne (7), sans le traverser.

4. Dispositif de commande selon l'une des revendications 1 à 3, caractérisé en ce que le dispositif à culasse (25) comporte un élément de culasse (26), qui est commun aux deux bobines (15), de manière qu'il puisse être traversé par le champ magnétique des deux bobines (15).

5. Dispositif de commande selon la revendication 4, caractérisé en ce que l'élément de culasse (26), commun aux deux bobines (15), est prévu dans la zone intermédiaire (27), se trouvant entre les bobines (15) voisines.

6. Dispositif de commande selon la revendication 4 ou 5, caractérisé en ce que les deux bobines (15) sont disposées avec leurs axes parallèles et avec leurs surfaces latérales (18) tournées l'une vers l'autre.

7. Dispositif de commande selon la revendication 6, caractérisé en ce que l'élément de culasse (26), commun est en forme de plaque, les deux surfaces de plaque (28) étant tournées chacune vers l'une des deux bobines (15).

8. Dispositif de commande selon la revendication 6 ou 7, caractérisé en ce que les deux bobines (15) sont sans dispositif à culasse, dans la zone des portions opposées l'une à l'autre de leurs surfaces latérales.

9. Dispositif de commande selon l'une des revendications 6 à 8, caractérisé en ce que chaque bobine (15) est flanquée, sur au moins un et de préférence sur ses deux côtés frontaux, d'une partie de culasse (35), qui est reliée à l'élément de culasse (26) associé conjointement.

10. Dispositif de commande selon la revendication 9, caractérisé en ce que le dispositif à culasse (25) présente une configuration en H, la pièce de liaison centrale du H correspondant à l'élément de culasse (26) commun et les quatre autres portions du H correspondant aux parties de culasse (35) frontales.

11. Dispositif de commande selon la revendication 10, caractérisé en ce que les deux parties de culasse (35) respectives, qui sont associées aux côtés frontaux, tournés vers le même côté axial, des deux bobines (15), sont réunies en un élément transversal de culasse (32, 32'), qui est fixé sur le côté frontal correspondant de l'élément de culasse (26) commun, formé séparément.

12. Dispositif de commande selon l'une des revendications 3 à 11, caractérisé en ce que les parties de culasse (35) frontales sont en forme de plaques.

13. Dispositif de commande selon l'une des revendications 1 à 12, caractérisé en ce que le dispositif à culasse (25) et les bobines (15) sont coulés dans un boîtier (38).

14. Dispositif de commande selon l'une des revendications 1 à 13, caractérisé en ce que les deux bobines (15) sont superposées dans la direction de la hauteur (45) du dispositif de commande (3), leurs axes longitudinaux (17) étant disposés décalés l'un par rapport à l'autre, à angle droit par rapport au plan de référence (46) défini par la direction de la hauteur (45) et la direction longitudinale (12) du dispositif de commande (3).
